# EUROPÄISCHE PATENTSCHRIFT

(11) **EP 3 592 617 B1**
(45) Veröffentlichungstag und Bekanntmachung des Hinweises auf die Patenterteilung: **07.04.2021**
(21) Anmeldenummer: 18708365.4
(22) Anmeldetag: 22.02.2018
(51) Int. Cl.: B60T 10/02

(54) **VERFAHREN ZUR STEUERUNG EINER TRENNKUPPLUNG**
METHOD FOR CONTROLLING A SEPARATING CLUTCH
PROCÉDÉ DE COMMANDE D'UN EMBRAYAGE SÉPARATEUR

(30) Priorität: 06.03.2017 DE 102017104600
(43) Veröffentlichungstag der Anmeldung: 15.01.2020
(73) Patentinhaber: Voith Patent GmbH, 89522 Heidenheim (DE)
(72) Erfinder: ADAMS, Werner, 74564 Crailsheim (DE); MENNE, Achim, 74564 Crailsheim (DE); MÜLLER, Philipp, 74523 Schwäb. Gmünd (DE)
(74) Vertreter: Voith Patent GmbH - Patentabteilung
(86) Internationale Anmeldenummer: PCT/EP2018/054324
(87) Internationale Veröffentlichungsnummer: WO 2018/162241

(56) Entgegenhaltungen:
- DE-A1-102007 024 698
- DE-A1-102013 021 237
- US-B2- 9 291 220

## Beschreibung

Die Erfindung betrifft ein Verfahren zur Steuerung einer Trennkupplung in einem Antriebsstrang eines Kraftfahrzeugs mit einem Antriebsmotor und einem Retarder.

Der Aufbau eines entsprechenden Antriebsstrangs sieht meist wie folgt aus. Die Trennkupplung ist zwischen Antriebsmotor und/oder Antriebsstrang und Retarder angeordnet, sodass der Rotor des Retarders über die Trennkupplung in eine Triebverbindung mit dem Antriebsmotor und/oder dem Antriebsstrang schaltbar ist.

Sobald der Rotor über die Trennkupplung drehfest mit dem Antriebsstrang verbunden ist wird zum Aufbau einer Bremsleistung oder Bremsmomentes der Arbeitsraum des Retarders, gebildet von Rotor und Stator, mit einem Betriebsmedium befüllt, so dass von dem Retarder auf den Antriebsstrang und/oder Antriebsmotor ein Bremsmoment ausgeübt wird. Die Schaltung der Trennkupplung erfolgt dabei mittels einer Steuerung. Die Trennkupplung kann in eine Schließstellung oder eine Offenstellung geschaltet werden.

Dabei kann die Trennkupplung eine Synchronisierungseinheit umfassen, um den Rotor mit der Antriebsdrehzahl zu synchronisieren. Weiterhin muss sichergestellt sein, dass der Arbeitsraum erst dann befüllt wird, wenn mittels der Trennvorrichtung eine drehfeste Verbindung zwischen Rotor und Antriebsstrang hergestellt wurde. Bei einer Bremsanforderung wird die Kupplung geschlossen und nach Ende der Bremsanforderung wieder geöffnet. Vor dem Öffnen ist sicherzustellen, dass der Arbeitsraum im Wesentlichen entleert worden ist, wobei die Entleerung dadurch erzielt wird, dass bei verschlossenem Zulauf in den Arbeitsraum der Rotor eine gewisse Zeit nachläuft und dadurch den Arbeitsraum leerpumpt.

In der DE10 2007 024 698 A1 wird ein Verfahren zum Steuern eines Retarders in einem Kraftfahrzeug offenbart. Bei dem beschriebenen Verfahren geht es im Wesentlichen darum, den Einkuppelzeitpunkt für die Retarderkupplung festzulegen. Der Retarder wird durch ein vorsorgliches Einkoppeln in einen Retarderstandby-Zustand geschaltet, bei dem die Synchronisation und Kopplung des Rotors mit dem Antriebsstrang immer dann erfolgt, wenn von einem ersten Betriebszustand der Antriebsmotor mittels dem Fusspedal, dem Hebel oder Aktuator, vom Fahrer des Kraftfahrzeuges, in einen zweiten Betriebszustand geschaltet wird. Dadurch wird die Gesamt-Einschaltzeit verkürzt, weil der Retarder auch ohne eine direkte Bremsanforderung schon einmal vorsorglich gekoppelt wird, so dass bei einer echten Bremsanforderung unmittelbar mit dem Befüllen des Retarders begonnen werden kann.

Dokument DE10 2013 021237 A1 offenbart ein Verfahren gemäß dem Oberbegriff des Anspruchs 1.

Eine der Aufgaben der Erfindung ist es, das Verfahren zur Steuerung einer Trennkupplung derart zu verbessern, dass die Kopplungsvorgänge besser auf den Fahrzeugbetrieb abstimmbar sind und so die Lebensdauer aller am Bremsen beteiligten Komponenten im Antriebsstrang verlängert wird.

Erfindungsgemäß wird diese Aufgabe mit einem Verfahren gemäß Anspruch 1 gelöst. Weitere vorteilhafte Ausgestaltungen und bevorzugte Lösungsvarianten sind in den hiervon abhängigen Unteransprüchen beschrieben.

Erfindungsgemäß wird ein Verfahren zur Steuerung einer Trennkupplung in einem Antriebsstrang eines Kraftfahrzeugs mit einem Antriebsmotor und einem Retarder vorgeschlagen. Dabei ist die Trennkupplung zwischen Antriebsmotor und/oder Antriebsstrang und Retarder angeordnet, sodass ein Rotor des Retarders über die Trennkupplung in eine Triebverbindung mit dem Antriebsmotor und/oder dem Antriebsstrang schaltbar ist. Dabei ist ein Arbeitsraum des Retarders zum Aufbau einer Bremsleistung mit einem Betriebsmedium befüllbar, sodass von dem Retarder auf den Antriebsstrang und/oder Antriebsmotor ein Bremsmoment ausgeübt wird, wenn der Arbeitsraum zwischen Rotor und Stator mit einem Arbeitsmedium befüllt ist. Weiterhin ist eine Steuerung vorgesehen, mittels der die Trennkupplung in eine Schließstellung oder eine Offenstellung schaltbar ist.

Dabei ist vorgesehen, dass die Schaltung der Trennkupplung in die Schließstellung in Abhängigkeit von zumindest einem Eingangssignal an die Steuerung erfolgt und die Schaltung der Trennkupplung zurück in die Offenstellung in Abhängigkeit davon erfolgt, dass sich im Wesentlichen kein Arbeitsmedium im Arbeitsraum des Retarders befindet und weiterhin vorbestimmte Grenzwerte von zumindest einem weiteren Betriebs- und/oder Umgebungsparameter nicht überschritten sind.

Durch diesen zusätzlichen Parameter wird somit sichergestellt, dass die Trennkupplung nur dann öffnet, wenn während des Fahrzeugbetriebs festgestellt wird, dass ein Aus- und wieder Einkuppeln nicht zu einer Lebensdauerreduzierung der beteiligten Bauteile führt. Durch das gezielte nicht Auskuppeln bleibt der Retarder betriebsbereit, ohne das er erneut in diese Betriebsbereitschaft gebracht werden muss. Dies erhöht zudem die Funktionssicherheit

So kann vorgesehen sein, dass das Eingangssignal an die Steuerung über ein Fußpedal, einen Hebel oder einen Aktuator generiert wird.

Weiterhin kann vorgesehen sein, dass die Schaltung der Trennkupplung in die Offenstellung nur erfolgt, wenn zumindest eines der folgenden Betriebs- und/oder Umgebungsparameter erfüllt ist und/oder festlegbare Grenzwerte nicht überschritten sind:
- Gefälle der Fahrbahn
- Zeit oder Strecke bis zum Erreichen einer Gefällestrecke
- ein entsprechendes Eingangssignal (10) durch den Fahrer generiert wird
- die letzten Retarder-Bremsungen nicht innerhalb eines definierten Zeitintervalls generiert wurden
- bestimmte Grenzwerte der Betriebsbremsen des Fahrzeuges aufgrund vorangegangener Bremsungen überschritten sind.

Optional oder zusätzlich kann vorgesehen sein, dass ein Neigungssensor und/oder GPS-Daten zur Ermittlung von Umgebungsparameter verwendet werden.

In einer Ausführung kann vorgesehen sein, dass bei Erreichen eines Gefälles von > 1,5% oder einer Wegstrecke von < 300m und/oder einer Zeit von < 10s bis zur Gefällestrecke der abgefragte Umgebungsparameter durchschritten ist und eine Öffnung der Trennkupplung verhindert wird. Es ist aber auch möglich, dass ein Abstandssensor und/oder eine Abstandsregelung zur Ermittlung von Umgebungsparametern verwendet werden.

Des Weiteren kann ein Temperatursensor zur Messung der Betriebstemperatur der Betriebsbremse verwendet werden.

Dabei kann zusätzlich vorgesehen sein, dass die Schaltung der Kupplung in die Offenstellung mittels eines manuell auslösbaren Signals verhindert wird. So kann der Fahrer beim Erkennen einer erhöhten Bremswahrscheinlichkeit die Entkopplung des Retarders verhindern. Dies kann mittels eines entsprechenden Signals, wie die Betätigung eines Schalters, erfolgen.

Weiterhin kann die Schaltung der Kupplung in die Offenstellung bei Überschreitung einer Antriebsmotor- und/oder der Antriebsstrangdrehzahl und/oder der Rotorwellendrehzahl verhindert werden.

Weitere Merkmale des erfindungsgemäßen Verfahrens und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: eine schematische Darstellung eines Kraftfahrzeugs zur Verwendung eines erfindungsgemäßen Verfahrens
- Figur 2: ein Ablaufdiagramm dargestellt, aus dem beispielhaft der Ablauf des erfindungsgemäßen Verfahrens hervorgeht

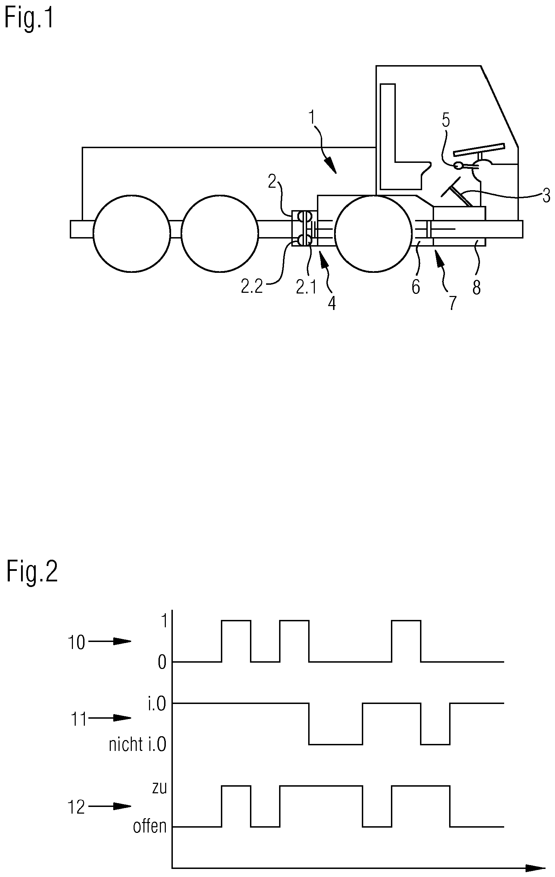

In der Figur 1 erkennt man den Antriebsstrang 1 eines Fahrzeugs, umfassend einen Antriebsmotor 8, ein Getriebe 6 und eine getriebeabtriebsseitig angeordnete hydrodynamische Bremse 2 bzw. Retarder. Der Retarder 2 ist über einen Hochtrieb, hier nicht dargestellt, mit dem Getriebe 6 gekoppelt. Bei dem Retarder handelt es sich somit um einen sogenannten Sekundärretarder.

Die Leistungsabgabe des Antriebsmotors 8 ist über ein Fußpedal 3 regelbar. Je tiefer das Fußpedal 3 nach unten gedrückt wird, desto mehr Leistung gibt der Antriebsmotor 8 über eine Kupplung 7 auf das Getriebe 6 ab.

Der Retarder 2 ist über eine Trennkupplung 4 in eine Triebverbindung mit dem Getriebe 6 schaltbar. Es erfolgt somit eine mittelbare Kopplung in den Kraftfahrzeugantriebsstrang 1. Der Retarder 2 ist in reine Triebverbindung mit dem Anrtiebsstrang 1 schaltbar und aus dieser Triebverbindung herausnehmbar, indem die Trennkupplung 4 geschlossen oder geöffnet wird. Bei geschlossener Trennkupplung 4 wird der Rotor 2.1 des Retarders 2 über eine Getriebeabtriebswelle, beispielsweise einen Hochtrieb, angetrieben, beschleunigt.

Im befüllten Zustand bildet sich eine Kreislaufströmung aus, so dass vom Arbeitsmedium im Arbeitsraum ein Drehmoment vom Rotor 2.1 auf den Stator 2.2 übertragen wird, was wiederum eine Bremswirkung bzw. Bremsmoment auf den Rotor 2.1 ausübt. Erfindungsgemäss wird jedoch der Rotor 2.1 des Retarders 2 durch schließen der Trennkupplung 4 auch unter bestimmten Randbedingungen im entleerten Zustand der Bremse 2 beziehungsweise im weitgehend entleerten Zustand der Bremse 2 angetrieben, um den Retarder 2 sozusagen in den Standby-Betrieb zu versetzen.

Die Bremsleistung des Retarders 2 ist über einen Bremsaktuator 5, der von dem Fahrer betätigbar ist, einstellbar, das heißt in einem geschlossenen Regelsystem regelbar oder in einem offenen Steuersystem steuerbar. Alternativ oder zusätzlich kann eine Steuervorrichtung vorgesehen sein, die die Bremsleistung in Abhängigkeit bestimmter Betriebszustände oder Vorgaben regelt, beispielsweise einer Geschwindigkeitsregelanlage oder eine Abstandsregelanlage.

Alternativ zu der gezeigten Darstellung kann der Retarder 2 auch als Primärretarder ausgeführt sein, das heißt er ist in Richtung der Triebverbindung vom Antriebsmotor 8 zu den Antriebsrädern gesehen vor dem Getriebe 6 beziehungsweise am Getriebeeingang angeordnet und wird mit Motordrehzahl betrieben.

In Figur 2 ist ein Ablaufdiagramm dargestellt aus dem beispielhaft der Ablauf des erfindungsgemäßen Verfahrens hervorgeht. Die Trennkupplung 4 wird immer dann geschlossen, wenn ein Eingangssignal 10 gesetzt ist. Ein Eingangssignal kann die Stellung des Fußpedals 3, Gaspedals, sein. Dabei wird ein Signal zum Schließen der Kupplung generiert, wenn der Fahrer das Fußpedal loslässt, das heißt ein Herunterdrücken des Fußpedals 3 beendet. Ein Eingangssignal kann aber auch vom Hebelschalter 5 des Retarders kommen, den der Fahrer bedient oder das Eingangssignal kommt von einem Aktuator.

Die Schaltung der Trennkupplung zurück in die Offenstellung wird aber nur in Abhängigkeit davon erfolgen, dass sich im Wesentlichen kein Arbeitsmedium im Arbeitsraum des Retarders (2) befindet und weiterhin vorbestimmte Grenzwerte von zumindest einem weiteren Betriebs- und/oder Umgebungsparameter (11) nicht überschritten sind.

Es reicht somit nicht, dass der Fahrer das Fußpedal 3 wieder betätigt, um die Kupplung in die Offenstellung zu schalten. Vielmehr wird über die Steuerung noch ein weiterer Parameter abgefragt der letztendlich über die Öffnung der Kupplung entscheidet.

Die Schaltung der Trennkupplung 4 in die Offenstellung erfolgt nur, wenn zumindest eines der folgenden Betriebs- und/oder Umgebungsparameter 11 erfüllt ist und/oder festlegbare Grenzwerte nicht überschritten sind.

Wird beispielweise ein Gefälle der Fahrbahn ermittelt bleibt die Kupplung geschlossen. Weiterhin kann die Zeit bis zum Erreichen einer Gefällestrecke als Kriterium herangezogen werden.

Alternativ oder zusätzlich kann auch ein entsprechendes Eingangssignal 10 durch den Fahrer generiert werden.

Es können aber auch technische Bedingungen dazu führen, dass es sinnvoll oder erforderlich ist die Trennkupplung 4 besser geschlossen zu halten. Beispielsweise wenn die letzten Retarder-Bremsungen innerhalb eines definierten Zeitintervalls generiert wurden. Eine Öffnung erfolgt somit nur wenn in einem vergangenen Zeitintervall nicht zu viele Bremsungen oder Zuschaltungen erfolgt sind.

Weiterhin können Messwerte von allen Sensoren im Antriebsstrang dazu verwendet werden. Werden beispielsweise bestimmte Grenzwerte der Betriebsbremsen des Fahrzeuges aufgrund vorangegangener Bremsungen überschritten, kommt es nicht zur Öffnung der Trennkupplung.

Ist der Parameterzustand in Ordnung "i.O", das heißt, es wird kein Grenzwert überschritten und alle Betriebsparameter werden eingehalten, kann die Trennkupplung je nach Signalzustand 0 oder 1 in die Offen- oder Geschlossenstellung geschaltet werden. Der Parameterzustand im Sinne der Erfindung ist ein im Steuergerät ermittelter Zustand, der aus einem oder mehreren Betriebsparametern, Messwerten und/oder Umgebungsparametern zusammengesetzt sein kann. Die Summe aller Werte und/oder Einzelbeurteilungen führt entweder zu einem Zustand "i.O." in Ordnung oder "nicht i.O." Die Trennkupplung wird nicht geöffnet wenn der Parameterzustand nicht "i.O." ist.

Werden Grenzwerte oder Betriebsparameter überschritten, erfolgt keine Schaltung der Trennkupplung von der "Zu-" in die "Offenstellung", auch wenn kein Eingangssignal vorliegt. Erst wenn die Betriebsparameter wieder "i.O." sind, wird die Trennkupplung geöffnet.

Nicht dargestellt ist, welche Bedingungen erfüllt sein müssen, damit die Trennkupplung von der Offen- in die Schließstellung geschaltet wird. Hier wird auf die DE10 2007 024 698 A1 verwiesen, in der bereits ausführlich eine mögliches Verfahren zum Steuern einer hydrodynamischen Bremse anzugeben ist, mit welchem ausreichend kurze Reaktionszeiten des Retarders erreicht werden, um diesen in eine Betriebsbereitschaft zu schalten.

Durch die vorausschauende Schaltung der Trennkupplung, also dem vorsorglichen Schließen der Trennkupplung, wie in der DE10 2007 024 698 A1 beschrieben, wie auch das vorsorgliche Geschlossen halten bzw. nicht öffnen der Trennkupplung, wird erreicht, dass im Nichtbremsbetrieb die Leerlaufverluste minimiert sind, und dass die Trennkupplung kompakt und langlebig ausgelegt werden kann.

### Bezugszeichenliste

- 1: Antriebsstrang
- 2: Retarder
- 3: Fußpedal
- 4: Trennkupplung
- 5: Bremsaktuator
- 6: Getriebe
- 7: Kupplung
- 8: Motor
- 9: Räder
- 10: Eingangssignal
- 11: Parameterzustand
- 12: Kupplungsposition
- 13: Füllzustand

## Patentansprüche

1. Verfahren zur Steuerung einer Trennkupplung (4) in einem Antriebsstrang (1) eines Kraftfahrzeugs mit einem Antriebsmotor (8) und einem Retarder (2), wobei die Trennkupplung (4) zwischen Antriebsmotor (8) und/oder Antriebsstrang (1) und Retarder (2) angeordnet ist, sodass ein Rotor (2.1) des Retarders (2) über die Trennkupplung (4) in eine Triebverbindung mit dem Antriebsmotor (8) und/oder dem Antriebsstrang (1) schaltbar ist und ein Arbeitsraum des Retarders (2) zum Aufbau einer Bremsleistung mit einem Betriebsmedium befüllbar ist, sodass von dem Retarder (2) auf den Antriebsstrang (1) und/oder Antriebsmotor (8) ein Bremsmoment ausgeübt wird, wobei eine Steuerung vorgesehen ist, mittels der die Trennkupplung (4) in eine Schließstellung oder eine Offenstellung schaltbar ist,
**dadurch gekennzeichnet,**
**dass** die Schaltung der Trennkupplung (4) in die Schließstellung in Abhängigkeit von zumindest einem Eingangssignal (10) an die Steuerung erfolgt und die Schaltung der Trennkupplung zurück in die Offenstellung in Abhängigkeit davon erfolgt, dass sich im Wesentlichen kein Arbeitsmedium im Arbeitsraum des Retarders (2) befindet und weiterhin vorbestimmte Grenzwerte von zumindest einem weiteren Betriebs- und/oder Umgebungsparameter (11) nicht überschritten sind.

2. Verfahren gemäß Anspruch 1,
**dadurch gekennzeichnet,**
**dass** das Eingangssignal an die Steuerung über ein Fußpedal (3), einen Hebel (5) oder einen Aktuator generiert wird.

3. Verfahren gemäß Anspruch 1,
**dadurch gekennzeichnet,**
**dass** die Schaltung der Trennkupplung (4) in die Offenstellung nur erfolgt, wenn zumindest eines der folgenden Betriebs- und/oder Umgebungsparameter (11) erfüllt ist und/oder festlegbare Grenzwerte nicht durchschritten sind:
- Gefälle der Fahrbahn
- Zeit oder Strecke bis zum Erreichen einer Gefällestrecke
- ein entsprechendes Eingangssignal (10) durch den Fahrer generiert wird
- die letzten Retarder-Bremsungen oder Zuschaltungen nicht innerhalb eines definierten Zeitintervalls generiert wurden
- bestimmte Grenzwerte der Betriebsbremsen des Fahrzeuges aufgrund vorangegangener Bremsungen überschritten sind.

4. Verfahren gemäß Anspruch 3,
**dadurch gekennzeichnet,**
**dass** ein Neigungssensor und/oder GPS-Daten zur Ermittlung von Umgebungsparameter verwendet werden.

5. Verfahren gemäß Anspruch 3 oder 4
**dadurch gekennzeichnet,**
**dass** ein Gefälle von > 1,5% oder eine Wegstrecke von < 300m und/oder einer Zeit von < 10s bis zur Gefällestrecke ermittelt wird.

6. Verfahren gemäß Anspruch 3,
**dadurch gekennzeichnet,**
**dass** ein Abstandssensor und/oder eine Abstandsregelung zur Ermittlung von Umgebungsparametern verwendet werden.

7. Verfahren gemäß Anspruch 3,
**dadurch gekennzeichnet,**
**dass** ein Temperatursensor zur Messung der Betriebstemperatur der Betriebsbremse verwendet wird.

8. Verfahren nach Anspruch 1,
**dadurch gekennzeichnet,**
**dass** die Schaltung der Kupplung in die Offenstellung mittels eines manuell auslösbaren Signals verhindert wird.

9. Verfahren nach Anspruch 1,
**dadurch gekennzeichnet,**
**dass** die Schaltung der Kupplung in die Offenstellung bei Überschreitung einer Antriebsmotor- (8) und/oder der Antriebsstrangdrehzahl und/oder der Rotorwelledrehzahl verhindert wird.

## Claims

1. Method for controlling a clutch (4) in a drive train (1) of a motor vehicle having a drive motor (8) and a retarder (2), wherein the clutch (4) is arranged between the drive motor (8) and/or drive train (1) and retarder (2) so that a rotor (2.1) of the retarder (2) can be switched via the clutch (4) into a drive connection with the drive motor (8) and/or the drive train (1), and a working space of the retarder (2) can be filled with an operating medium in order to build up braking power, so that a braking torque is applied to the drive train (1) and/or the drive motor (8) by the retarder (2), wherein a controller is provided by means of which the clutch (4) can be switched into a closed position or an open position,
**characterized**
**in that** the switching of the clutch (4) into the closed position takes place as a function of at least one input signal (10) to the controller, and the switching of the clutch back into the open position takes place as a function of the fact that there is essentially no working medium in the working space of the retarder (2) and furthermore predetermined limiting values of at least one further operating and/or ambient parameter (11) are not exceeded.

2. Method according to Claim 1,
**characterized**
**in that** the input signal to the controller is generated by means of an accelerator pedal (3), a lever (5) or an actuator.

3. Method according to Claim 1,
**characterized**
**in that** the switching of the clutch (4) into the open position takes place only if at least one of the following operating and/or ambient parameters (11) is satisfied and/or definable limiting values are not exceeded:
- negative gradient of the underlying surface
- time or distance until a stretch of negative gradient is reached
- a corresponding input signal (10) is generated by the driver
- the last retarder braking operations or activation operations have not been generated within a defined time interval
- specific limiting values of the service brakes of the vehicle are exceeded owing to preceding braking operations.

4. Method according to Claim 3,
**characterized**
**in that** an inclination sensor and/or GPS data are used to determine ambient parameters.

5. Method according to Claim 3 or 4,
**characterized**
**in that** a negative gradient of > 1.5% or a distance of < 300 m and/or a time of < 10 s up to the stretch of negative gradient is determined.

6. Method according to Claim 3,
**characterized**
**in that** a distance sensor and/or an adaptive cruise control operation are/is used to determine ambient parameters.

7. Method according to Claim 3,
**characterized**
**in that** a temperature sensor is used to measure the operating temperature of the service brake.

8. Method according to Claim 1,
**characterized**
**in that** the switching of the clutch into the open position is prevented by means of a manually triggerable signal.

9. Method according to Claim 1,
**characterized**
**in that** the switching of the clutch into the open position is prevented when a drive motor rotational speed (8) and/or the drive train rotational speed and/or the rotor shaft rotational speed are/is exceeded.

## Revendications

1. Procédé de commande d'un accouplement de séparation (4) dans une chaîne cinématique (1) d'un véhicule automobile comprenant un moteur d'entraînement (8) et un ralentisseur (2), l'accouplement de séparation (4) étant disposé entre le moteur d'entraînement (8) et/ou la chaîne cinématique (1) et le ralentisseur (2) de telle sorte qu'un rotor (2.1) du ralentisseur (2) puisse être commuté dans une liaison d'entraînement avec le moteur d'entraînement (8) et/ou la chaîne cinématique (1) par le biais de l'accouplement de séparation (4) et qu'un espace de travail du ralentisseur (2) puisse être rempli d'un milieu de travail pour constituer une puissance de freinage de sorte qu'un couple de freinage soit exercé par le ralentisseur (2) sur la chaîne cinématique (1) et/ou le moteur d'entraînement (8), une commande étant prévue qui permet de commuter l'accouplement de séparation (4) en position fermée ou en position ouverte,
**caractérisé en ce que**
l'accouplement de séparation (4) est commuté en position fermée en fonction d'au moins un signal d'entrée (10) au niveau de la commande et l'accouplement de séparation est ramené en position ouverte en fonction du fait qu'il n'y a pratiquement pas de milieu de travail dans l'espace de travail du ralentisseur (2) et en outre des valeurs limites prédéterminées ne sont pas dépassées par au moins un autre paramètre de fonctionnement et/ou d'environnement (11) .

2. Procédé selon la revendication 1,
**caractérisé en ce que**
le signal d'entrée au niveau de la commande est généré par le biais d'une pédale (3), d'un levier (5) ou d'un actionneur.

3. Procédé selon la revendication 1,
**caractérisé en ce que**
l'accouplement de séparation (4) n'est commuté en position ouverte que si l'un au moins des paramètres de fonctionnement et/ou d'environnement (11) suivants est respecté et/ou si des valeurs limites définissables n'ont pas été dépassées :
- pente de la chaussée
- temps ou distance pour atteindre une section en pente
- un signal d'entrée correspondant (10) est généré par le conducteur
- les derniers freinages ou la dernière mise en circuit du ralentisseur n'ont pas été générés dans un intervalle de temps défini
- des valeurs limites déterminées des freins de service du véhicule ont été dépassées en raison d'un freinage antérieur.

4. Procédé selon la revendication 3,
**caractérisé en ce que**
un capteur d'inclinaison et/ou des données GPS sont utilisés pour déterminer les paramètres d'environnement.

5. Procédé selon la revendication 3 ou 4,
**caractérisé en ce que**
une pente de plus de 1,5 % ou une distance de moins de 300 m et/ou un temps de moins de 10s par rapport à la section en pente sont déterminés.

6. Procédé selon la revendication 3,
**caractérisé en ce que**
un capteur de distance et/ou une régulation de distance sont utilisés pour déterminer des paramètres d'environnement.

7. Procédé selon la revendication 3,
**caractérisé en ce que**
un capteur de température est utilisé pour mesurer la température de fonctionnement du frein de service.

8. Procédé selon la revendication 1,
**caractérisé en ce que**
la commutation de l'accouplement en position ouverte est empêchée au moyen d'un signal déclenchable manuellement.

9. Procédé selon la revendication 1,
**caractérisé en ce que**
la commutation de l'accouplement en position ouverte est empêchée lorsque la vitesse de rotation du moteur d'entraînement (8) et/ou de la chaîne cinématique et/ou la vitesse de rotation de l'arbre du rotor sont dépassées.
